# FASCICULE DE BREVET EUROPEEN

(11) **EP 1 996 390 B1**
(45) Date de publication et mention de la délivrance du brevet: **04.08.2010**
(21) Numéro de dépôt: 07727098.1
(22) Date de dépôt: 20.03.2007
(51) Int. Cl.: B29C 70/44, B29C 33/38, B29C 33/50

(54) **PROCEDE DE REALISATION DE STRUCTURES DE FORMES COMPLEXES EN MATERIAUX COMPOSITES**
VERFAHREN ZUR HERSTELLUNG VON STRUKTUREN KOMPLEXER FORMEN AUS VERBUNDMATERIALIEN
METHOD FOR PRODUCING STRUCTURES OF COMPLEX SHAPES OF COMPOSITE MATERIALS

(30) Priorité: 20.03.2006 FR 0650956
(43) Date de publication de la demande: 03.12.2008
(73) Titulaire: European Aeronautic Defence And Space Company EADS, 75016 Paris (FR)
(72) Inventeur: CAVALIERE, Frédérick, F-78180 Montigny Le Bretonneux (FR); GUITTON, Maurice, Lunenburg, Nova Scotia BOJ 2CO (CA); GUITTON, Severine, Lunenburg, Nova Scotia BOJ 2CO (CA)
(74) Mandataire: Maupilier, Didier
(86) Numéro de dépôt international: PCT/EP2007/052621
(87) Numéro de publication internationale: WO 2007/107552

(56) Documents cités:
- WO-A-95/14563
- DE-A1- 4 215 919
- GB-A- 2 292 332
- GB-A- 2 381 491
- US-A- 4 292 101
- US-A- 5 262 121

## Description

La présente invention appartient au domaine de la réalisation de pièces de formes complexes en matériaux composites nécessitant des moules pendant les opérations de fabrication. Plus particulièrement le procédé suivant l'invention met en oeuvre des éléments de moules qui se trouvent emprisonnés dans la pièce au moment de sa réalisation et en sont ensuite extraits pour permettre la réalisation de pièces dites non démoulables.

Les pièces en matériaux composites comportant des fibres dans une matrice, par exemple une résine, sont le plus souvent réalisées à l'aide de moules destinés à donner au matériau utilisé la forme de ladite pièce.

Le matériau fibreux, sec ou préalablement imprégné de résine, est déposé sur le moule dont il doit épouser la forme et subit un cycle plus ou moins complexe pouvant comporter des phases d'injection de résine et ou de mise en pression et ou de chauffage.

Après le durcissement de la résine, généralement par polymérisation, la pièce en cours de réalisation ayant atteint les propriétés mécaniques et dimensionnelles recherchées est retirée du moule.

Les pièces de formes complexes nécessitent parfois d'utiliser des moules dont certains éléments peuvent se trouver bloqués dans la pièce au moment du démoulage. Il en est fréquemment ainsi des formes creuses ou enveloppantes qui nécessitent que le moule comporte des éléments particuliers ou noyaux qui remplissent les formes creuses de la pièce pendant sa réalisation.

Pour que l'extraction desdits noyaux soit possible sans endommager la pièce qui vient d'être réalisée, il est alors nécessaire, sauf à réaliser la pièce en plusieurs éléments assemblés dans une étape ultérieure, de construire des noyaux particuliers en plusieurs parties qui se déboîtent au moyen de clés pour être extraits de la pièce. Toutefois de tel noyaux en plusieurs éléments emboîtés ne sont pas toujours réalisables en pratique et sont toujours plus chers que des moules en un seul élément et peuvent s'avérer très complexes aussi bien au niveau de leur conception qu'au niveau de leur mise en oeuvre.

Une autre méthode également utilisée consiste à réaliser le noyau dans un matériau qui permet de détruire ledit noyau pour l'éliminer de la pièce par exemple par une action mécanique ou par fusion ou dissolution du matériau du noyau. Dans ce cas la difficulté est de trouver un matériau pour réaliser le noyau qui soit économiquement acceptable, soit apte à résister aux conditions parfois extrêmes rencontrées lors du processus de réalisation de la pièce en matériau composite, soit suffisamment solide pour résister aux manipulations et contraintes mécaniques pendant la préparation de la pièce en respectant des tolérances de formes sévères et puisse être éliminé mécaniquement ou par fusion sans risque d'endommager la pièce ou soit dissout par de l'eau ou par un autre solvant compatible avec le matériau de la pièce. Ces combinaisons de conditions ne sont pas toujours possibles et dans tous les cas il est nécessaire de fabriquer autant de noyaux ou de jeux de noyaux que de pièces à réaliser ce qui est, ainsi que la phase d'élimination du noyau et de respect des conditions d'hygiène et de sécurité en vigueur, coûteux sur le plan industriel.

Une autre méthode consiste à réaliser un noyau dans une matière qui soit suffisamment déformable pour que ledit noyau puisse être extrait par déformation. Ainsi un noyau réalisé dans un élastomère, éventuellement comportant des évidements, pourra être extrait par étirement et striction au travers d'une ouverture de dimensions plus petites que celles de la section du noyau. Le défaut des noyaux utilisant une matière déformable est leur instabilité dimensionnelle due à leur faible rigidité qui ne permet pas d'obtenir la reproduction, dans les tolérances exigées par certaines applications, des résultats lors de la fabrication des pièces. De plus le faible coefficient de striction ne permet pas de résoudre les situations avec des variations significatives de la section du noyau, en particulier lorsque le noyau doit être extrait par une ouverture de section réduite.

Pour réaliser un noyau à la fois rigide et qui puisse être extrait de la pièce après durcissement, une solution consiste à réaliser une vessie dans un matériau en élastomère, laquelle vessie est remplie d'un matériau granulaire. Dans une première étape la vessie, dont la forme est de préférence réalisée suivant la forme recherchée du noyau, est placée dans un moule contré les parois duquel elle est appliquée au moyen d'une dépression entre les parois de la vessie et celles du moule correspondant à la forme voulue du noyau. Après le remplissage de la vessie par le matériau granulaire, la dépression entre les parois du moule et de la vessie est interrompue et l'intérieur de la vessie est mis au vide ce qui a pour effet de compacter et de bloquer sous les forces d'écrasement de la vessie soumise à la pression atmosphérique le matériau granulaire contenu par ladite vessie, donnant ainsi à cette dernière à la fois la forme et la rigidité recherchée pour servir de support à la pose de tissus préimprégnés de résine. Après durcissement de la résine, la mise au vide à l'intérieur de la vessie est supprimée et la vessie est ouverte pour extraire le matériau granulaire. L'enveloppe vidée de la vessie est alors suffisamment déformable pour être retirée de la pièce en matériau composite dans laquelle elle est emprisonnée. Le brevet US 5262121, qui décrit un procédé selon le préambule de la revendication 1, décrit également un tel procédé de réalisation de tuyauteries complexes en matériau composite. Un problème qui se pose avec ce type de réalisation est la qualité dimensionnelle de la pièce réalisée qui peut être insuffisante. Cette qualité est en effet affectée par les variations de dimensions effectives de la vessie et ou du noyau après la mise au vide ainsi que par celles dues aux cycles de chauffage et de pression généralement utilisés pour la polymérisation de la résine. Si ces variations de dimensions ne sont pas gênantes pour des pièces composites de grande diffusion comme par exemples des tuyauteries de conditionnement d'air, elles sont généralement inacceptables pour la réalisation de pièces composites hautes performances, comme par exemple des pièces structurales avec des tolérances géométriques serrées destinées à un assemblage précis et dont les caractéristiques dimensionnelles sont souvent critiques de même que la santé structurale du matériau de la pièce finie qui ne doit pas contenir de bulles de gaz ou porosités, ni de poches de résine, ni de fibres « sèches », phénomènes qui conduisent à des taux de rebut importants en fabrication et sont autant de sources de délamination lorsque la pièce est soumise à des sollicitations en service ce qui conduit à surdimensionner les pièces dont la résistance structurale doit être est essentielle.

Afin de réaliser des pièces en matériau composite, comportant des formes non démoulables par des formes de moule conventionnel, avec les qualités dimensionnelles et structurales requises pour des pièces de qualité structurale telles que les pièces utilisées dans le domaine aéronautique, le procédé suivant l'invention met en oeuvre un noyau extractible comportant une vessie souple dont la rigidité est assurée par un remplissage d'un matériau solide granulaire et d'un fluide inter-granulaire, conformément au procédé de la revendication 1.

Dans le procédé de réalisation d'une pièce en matériau composite comportant des fibres d'une résine passant d'un état pâteux ou liquide à un état solide au cours d'une phase de durcissement et comportant une zone partiellement refermée, dans un volume correspondant en tout ou partie à la zone partiellement refermée est occupé par un noyau, ledit noyau comportant une vessie en matériau souple présentant une surface extérieure délimitant un volume du noyau dont les formes et les dimensions sont en accord avec le volume de la zone partiellement refermée et présentant une surface intérieure déterminant un volume de la vessie, lequel volume de la vessie est rempli d'un matériau solide granulaire et d'un fluide inter-granulaire, une pression est exercée sur la surface intérieure de la vessie par le matériau solide granulaire et ou le fluide de sorte que le volume du noyau soit modifié de manière contrôlée avant que le matériau composite ne soit totalement durci. Cette modification du volume du noyau avant que la résine ne soit durcie a pour effet d'équilibrer et d'homogénéiser les pressions sur les différentes parties mises en oeuvre permettant d'obtenir une forme de la pièce dans les tolérances recherchées et donc d'éviter les déformations locales de la pièce, ainsi qu'une bonne santé matière.

En particulier lorsque le durcissement de la résine est associé à une phase de cure thermique avec élévation de la température, le volume du noyau est modifié de manière contrôlée en sélectionnant le matériau solide granulaire en fonction de son coefficient de dilatation thermique et de l'élévation de température associée à la phase de durcissement de la résine.

Pour éviter les déformations de la pièce lors de sa réalisation malgré l'élévation de la température au cours de la phase de durcissement de la résine, le volume du noyau est modifiée de matière contrôlée en sélectionnant le matériau solide granulaire parmi des matériaux ayant un coefficient de dilatation thermique proche de la dilatation thermique du matériau composite de la pièce.

En particulier le matériau solide granulaire peut être un verre borosilicate ou un alliage fer nickel type Invar à faible coefficient de dilatation.

De façon générale lorsqu'un faible coefficient de dilatation est recherché le matériau solide granulaire est choisi parmi des matériaux dont le coefficient de dilatation thermique est compris entre 2 10E-6 par Kelvin et 9 10E-6 par Kelvin.

Lorsque le noyau doit avantageusement exercer une pression sur la pièce en cours de réalisation le volume du noyau est modifiée de matière contrôlée en sélectionnant le matériau solide granulaire parmi des matériaux ayant un coefficient de dilatation thermique supérieur au coefficient de dilatation thermique du matériau composite de la pièce, par exemple un alliage d'aluminium.

Lorsque la résine est durcie par une cure thermique, avantageusement le noyau est rempli avec un matériau solide granulaire et ou un fluide intersticiel choisis avec un coefficient de conductivité thermique apte à assurer la diffusion de la chaleur pendant la cure thermique.

Seul ou en combinaison avec l'action du matériau solide granulaire, l'action du noyau avant le durcissement de la résine est également obtenu en augmentant la pression Pn du fluide intersticiel avant le durcissement de la résine.

En particulier la pression Pn est augmentée à une valeur sensiblement égale à une pression Pa utilisée pour maintenir les fibres sur le noyau pendant la phase de durcissement de la résine, avec pour effet d'équilibrer la pression exercée sur la pièce par une vessie de mise en pression.

En particulier la pression Pn est augmentée à une valeur au moins égale à une pression Pr d'injection de la résine, par exemple si le procédé utilise un transfert de résine dans des fibres sèches, afin de contrôler la pression de la résine Pr, de la rendre homogène, permettre un meilleur contrôle des dimensions, d'obtenir une bonne santé matière, et d'éviter que la surface du noyau et donc la paroi de la pièce ne soit déformée par la pression de la résine.

Avantageusement, pour que la vessie soit décollée de la paroi de la pièce et puisse être extraite de la pièce dans laquelle elle est emprisonnée, la pression Pn dans la vessie du noyau, préalablement vidée du matériau solide granulaire, est diminuée à une valeur inférieure à la pression atmosphérique ce qui provoque son écrasement partiel.

La présentation détaillée d'un exemple de mise en oeuvre du procédé suivant l'invention est réalisée en références aux dessins qui représentent:

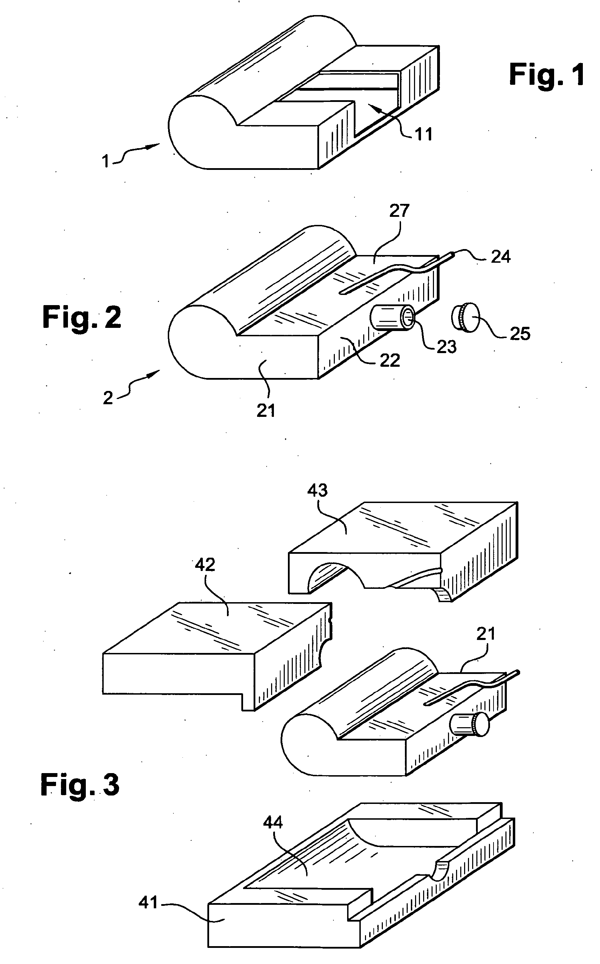

- Figure 1 :: un exemple de pièce réalisée en matériau composite et comportant un volume creux non démoulable.
- Figure 2 :: un noyau correspondant au volume en creux de la pièce présentée sur la figure 1 est constitué d'une vessie souple.
- Figure 3 :: un moule en plusieurs éléments destiné à préparer le noyau en utilisant la vessie souple.
- Figure 4 :: le moule et la vessie en position de préparation du noyau pendant l'étape de remplissage du noyau et avant l'étape de diminution de la pression dans la vessie.
- Figures 5a, 5b et 5c :: exemple d'utilisation de la vessie suivant différents procédés de réalisation de pièces en matériau composite: Pièce obtenue par dépose de fibres préimprégnées sur la forme du noyau (figure 5a), pièce réalisée dans un moule comportant une empreinte en creux dans laquelle sont déposées des fibres préimprégnées et dans laquelle est appliquée le noyau (figure 5b), pièce réalisée dans un moule fermé contenant le noyau suivant la technique de transfert de résine (figure 5c)
- Figure 6 :: principe d'extraction de la vessie du noyau de la pièce après durcissement du matériau composite

Les matériaux composites auxquels s'adresse préférentiellement l'invention sont les matériaux comportants des fibres telles que par exemple des fibres de verre, de carbone ou d'aramide type Kevlar®, emprisonnées dans une matrice organique telle que par exemple une résine polyester ou une résine époxy.

Ces genres de matériaux composites sont aujourd'hui largement utilisés dans de nombreux secteurs industriels pour la réalisation de pièces de formes plus ou moins complexes et pouvant être plus ou moins chargées.

Une technique largement répandue pour réaliser une pièce en matériau composite consiste à déposer les fibres sur une forme ou un moule ayant la forme souhaitée pour la pièce à réaliser. Les fibres sont déposées après avoir été enrobées avec une résine non polymérisée, on parle alors de fibres préimprégnées, ou bien sont déposées sèches puis enrobées ultérieurement par transfert de résine suivant la technique dite RTM.

Dans une autre étape, la résine initialement à l'état pâteux ou liquide est durcie, en général par polymérisation par exemple au cours d'une phase de cure thermique.

Au cours de l'étape de durcissement et ou au cours de l'étape qui la précède, il est essentiel d'appliquer des pressions et températures parfaitement contrôlées pour que le matériau composite acquière ses propriétés structurales. En particulier il convient d'éviter la formation de bulles d'air dans le matériau ainsi que des accumulations de résine sans fibre ou avec une concentration en fibres trop faible.

Une des principales difficultés lors de l'application des pressions nécessaires en vue d'obtenir ce résultat est de ne pas générer de déformations locales de la pièce et de maintenir un état de surface des pièces réalisées aussi proche que possible de l'état final recherché.

Lorsqu'une pièce 1 comporte une zone 11 partiellement ou presque totalement refermée sur elle même, un noyau 2 permet de réserver l'espace qui ne doit pas être rempli de résine et qui sert de support aux fibres 12, 13 déposées pour former la pièce. Le noyau 2 doit également résister à la pression pour ne pas être écrasé ni déformé par ces pressions qui sont exercées pendant le placement des fibres sur le noyau, en particulier lorsque sont utilisés des dispositifs de pose automatique de fibres ou, sur la pièce en cours de réalisation pendant la phase de durcissement par les moyens de compression des fibres, ou qui est exercée par la résine lorsque celle ci est injectée.

Ce noyau est réalisé au moyen d'une vessie 21 qui est remplie d'un matériau solide granulaire 31 c'est à dire un matériau fractionné en éléments de dimensions suffisamment petites pour que les éléments puissent remplir le volume intérieur 26 de la vessie 21 jusque dans les plus petits espaces intérieurs de la vessie. La vessie est réalisée avec des dimensions extérieures correspondant aux dimensions voulues pour le noyau dans un matériau souple tel qu'un élastomère capable de résister à l'environnement chimique et thermique rencontré lors de l'application du procédé de réalisation de la pièce. On trouve des résines silicones qui présentent des caractéristiques qui permettent de satisfaire ces conditions dans la plupart des cas courants, mais d'autres matériaux, par exemple des caoutchoucs, peuvent également être envisagés. Sur au moins une de ses faces 22 qui reste accessible lorsque la pièce 1 est réalisée, la vessie 21 comporte une première ouverture 23 par laquelle les éléments du matériau solide granulaire 31 peuvent être introduits et extraits. Sur une au moins de ses faces 27 qui reste accessible pendant la réalisation de la pièce 1 et lorsque la pièce est réalisée, la vessie 21 comporte une seconde ouverture 24 permettant de diminuer ou d'augmenter la pression d'un fluide 32 contenu dans la vessie. Ladite première ouverture 23 et la dite seconde ouverture 24 peuvent être sur des faces différentes de la vessie sous réserve de rester accessibles en particulier lorsque la pression à l'intérieure du noyau doit être modifiée pour la seconde ouverture 24 et lorsque le noyau doit être retiré de la pièce pour la première ouverture 23. En particulier une même ouverture peut assurer le rôle des deux ouvertures ou bien un obturateur 25 monté sur la première ouverture, après le remplissage du noyau avec le matériau solide granulaire, peut comporter la seconde ouverture. De préférence les éléments du matériau solide granulaire 31 ont des dimensions et des formes adaptées pour que lesdits éléments puissent s'écouler aisément par la première ouverture 23 de la vessie 21. Il s'agit par exemple de billes réalisées dans un matériau métallique ou vitreux ou tout autre matériau d'une rigidité suffisante et résistant aux conditions de températures rencontrées lors de la réalisation de la pièce.

Pour donner à la vessie 21 la forme et les dimensions voulues et pour que celles ci soient stables aux cours des opérations de préparation de la pièce à réaliser, il est procédé aux étapes suivantes :
1- la vessie 21 est placée dans un support, par exemple une forme en creux 44 réalisée en parties séparables 41, 42, 43, pour permettre de placer et de retirer la vessie 21, lui donnant les formes et dimensions voulues pour le noyau 2 puis,
2- le volume intérieur de la vessie 21 est totalement rempli avec des éléments de matériau solide granulaire 31 par la première ouverture 23 prévue à cette fin,
3- le volume restant dans la vessie qui correspond aux interstices entre les éléments de matériau solide granulaire est rempli avec un fluide 32,
4- l'ouverture de remplissage 23 est fermée par un obturateur 25 et une dépression est créée à l'intérieur de la vessie par aspiration d'une partie du fluide 32 à l'intérieur de la vessie 21 par des moyens (non représentés) raccordés sur la seconde ouverture 24,
5- le noyau est retiré du support en maintenant la dépression ce qui permet au noyau de conserver ses dimensions et sa forme du fait du compactage du matériau solide granulaire 31 à l'intérieur de la vessie 21.

Il convient de noter que la vessie du noyau peut être partiellement remplie de matériau solide granulaire et ou de fluide lors de sa mise en place au cours de l'étape 1. Un remplissage partiel ne gêne pas cette étape 1 et elle permet de diminuer le temps de remplissage complet de l'étape 2.

Par ailleurs le fluide 32 utilisé pour remplir le volume interstitiel lors de l'étape 3 est avantageusement un gaz et encore plus avantageusement de l'air.

Toutefois si des pressions élevées sont recherchées lors des étapes ultérieures lorsque la pression dans le noyau 2 doit être augmentée, le fluide est avantageusement un liquide en raison de son incompressibilité comparativement à un gaz.

Le noyau 2 ainsi réalisé est utilisé lors des opérations de dépose des fibres 12, 13 de la même manière que le serait un noyau démoulable ou un noyau destiné à être détruit après le durcissement du matériau composite. En particulier le noyau 2 peut servir de support des fibres 12, 13 devant constituer une pièce 1 dont le noyau représente sensiblement la forme ou être inséré entre différentes couches de fibres pour réserver un espace creux dans une pièce complexe.

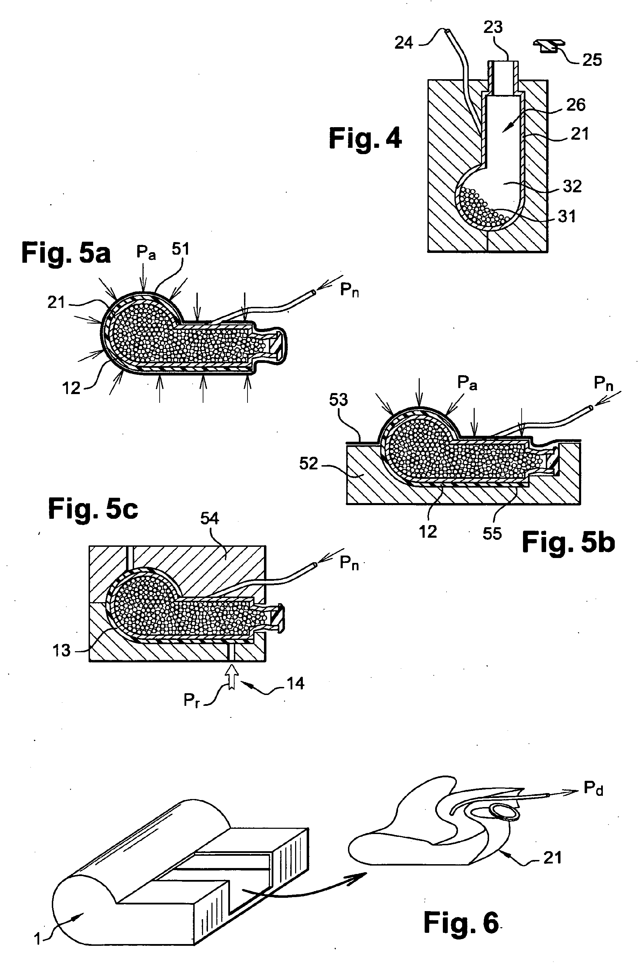

Dans un premier mode de mise en oeuvre du procédé suivant l'invention, lorsque les différentes parties du moule et les fibres 12, 13 ont été placées et le cas échéant la résine 14 injectée, la pression Pn dans le noyau 2 est augmentée de telle sorte que la pression Pa exercée par les autres moyens du moule lorsque ces moyens sont des moyens présentant une certaine souplesse, par exemple une vessie 51, 53 comme illustré sur les figures 5a et 5b ou une contre-forme en élastomère (non représentée), en particulier ceux situés sur la face de la pièce opposée à la face en contact avec le noyau, soit équilibrée.

Dans un second mode de mise en oeuvre du procédé suivant l'invention, lorsque les différentes parties du moule 52, 54 et les fibres 12, 13 ont été placées et le cas échéant la résine 14 injectée, la pression Pn dans le noyau 2 est augmentée de telle sorte que le noyau comprime le matériau composite 12, 13 contre les parois du moule 52, 54 lorsque celui-ci est un moule à parois rigides. Notamment, lorsque la pièce est réalisée suivant un procédé par transfert de résine comme illustré sur la figure 5c, après injection de la résine 14 jusqu'à imprégnation totale des fibres 13 et gavage à un niveau dépression PR les ouvertures d'injection de la résine 14 sont fermées et la pression Pn est augmentée dans la vessie du noyau à une valeur supérieure ou égale à la valeur pression Pr pour compacter le matériau composite et homogénéiser la pression.

Par ce procédé, d'une part on assure une meilleure mise en pression de la fibre 12, 13 comportant la résine avec pour effet de diminuer fortement le risque de présence de bulles d'air et d'améliorer le taux volumique de fibre dans le coeur du matériau composite et d'autre part on évité les déformations locales induites par les irrégularités de surface et les inévitables défauts dans les dimensions d'un noyau 2 réalisé avec une vessie 21 en élastomère. En outre, lorsqu'une forme rigide 52, 54 de moule est utilisée, le procédé garanti que la paroi de la pièce 1 en cours de réalisation épouse parfaitement la surface du moule, y compris dans sa structure interne, c'est à dire que les fibres 12, 13 sont orientées dans des directions sensiblement parallèles à la surface du moule 52, 54.

Ainsi, suivant le type de pièces réalisées et le procédé de réalisation de matériaux composites mis en oeuvre :
a) le noyau comme illustré figure 5a est utilisé comme support pour déposer des fibres 12 préimprégnées puis une pression est exercée de l'extérieur de la pièce en cours de réalisation en direction du noyau 2, par exemple au moyen d'une vessie 51 qui enveloppe la pièce comportant le noyau 2 soumise à une pression Pa et dans laquelle est créé un vide partiel. Lorsque cette pression extérieure Pa est établie, la pression Pn dans le noyau est augmentée de sorte que le matériau composite 12 se trouve comprimé de manière homogène et sensiblement isostatique pendant sa phase de polymérisation entre la pression exercée par la vessie extérieure 51 et par celle 21 du noyau. Avantageusement la pression Pn dans le noyau 2 est établie à la valeur de la pression Pa s'exerçant sur la vessie extérieure 51, en général la pression de l'autoclave dans lequel est réalisée la pièce 1.
b) comme illustré sur la figure 5b le noyau 2 est utilisé comme contre-forme pour appliquer des fibres 12 préimprégnées déjà déposées dans une empreinte 55 d'un moule 52 contre lequel les fibres 12 doivent être maintenues puis, le cas échéant, le noyau 2 est recouvert de nouvelles fibres 12 préimprégnées. Une pression est exercée de l'extérieur de la pièce en cours de réalisation pour comprimer le matériau composite 12 contre le moule 52, par exemple soit au moyen d'une vessie extérieure 53 qui recouvre la pièce comportant le noyau 2 et de la création d'un vide partiel entre la vessie extérieure et le moule, soit au moyen d'une contre-forme (solution non représentée) pouvant comporter une partie d'appui en un matériau élastomère. Lorsque cette pression extérieure Pa est établie, la pression Pn dans le noyau est augmentée de sorte que le matériau composite 12 se trouve comprimé pendant sa phase de polymérisation entre la pression exercée par la vessie extérieure ou la contre-forme et par celle exercée par la vessie du noyau. Avantageusement lorsqu'une vessie extérieure 53 est utilisée, la pression Pn dans le noyau 2 est établie à la valeur de la pression Pa s'exerçant sur la vessie extérieure, en général la pression de l'autoclave dans lequel est réalisée la pièce.
c) comme illustré sur la figure 5c le noyau 2 est placé entre les fibres sèches 13 déposées dans un moule fermé 54 dont les surfaces intérieures correspondent aux surfaces extérieures de la pièce 1 à réaliser. Une résine fluide 14 est injectée à l'intérieur du moule 54 qui rempli l'espace entre les fibres 13 suivant le procédé de réalisation de pièces en matériau composite connu sous le nom de Moulage par Transfert de Résine (RTM). Avant que la résine 14 ne durcisse, la pression Pn est augmentée dans le noyau 2 pour comprimer les zones de la pièce entre le noyau 2 et les parois du moule 54. Dans ce cas la pression Pn dans le noyau 2 est choisie au moins égale à la pression Pr à laquelle la résine 14 est injectée ou supérieure d'une valeur d'écart de pression fonction de la compression voulue des fibres 13 dans la zone du noyau 2.

Dans tous les cas lorsque le cycle de durcissement du matériau de la pièce 1 est terminé, la pression Pn dans la vessie 21 du noyau et le cas échéant les autres pressions mises en oeuvre dans le procédé de réalisation de la pièce en matériau composite sont ramenées à la pression atmosphérique et la pièce est sortie du moule.

Le noyau 2 est alors vidé des éléments de matériau solide granulaire 31 qu'il contient par la première ouverture qui est restée accessible ce qui lui permet d'acquérir la souplesse et la possibilité d'être déformé pour être extrait par traction du volume de la pièce qu'il a contribué à former comme illustré sur la figure 6.

Avantageusement la première ouverture 23 de la vessie 21 du noyau vidée des éléments de matériau solide granulaire 31 est refermée et une dépression Pd est créée dans la vessie, par exemple en utilisant la seconde ouverture 24, de telle sorte que la vessie se trouve déformée, aplatie ou écrasée, sous l'effet de la pression atmosphérique ce qui permet d'une part de décoller la vessie 21 du matériau composite de la pièce 1 sans effort significatif et d'autre part de faciliter l'extraction de la vessie 21 par l'ouverture de la pièce.

La pièce peut comporter un, deux ou plusieurs noyaux, chacun étant préparé, mis en place et extrait par application du même procédé pour participer à la réalisation de la pièce en matériau composite.

Avantageusement, lorsque le procédé de réalisation de la pièce en matériau composite utilise une cure thermique pour durcir la résine utilisée, cas le plus fréquent, le matériau solide granulaire 31 et le cas échéant le fluide utilisés pour remplir la vessie 21 du noyau 2 sont choisis en fonction de leurs caractéristiques de conductivité thermique et de dilation thermique pour participer au comportement thermique du moule.

Avantageusement lorsque la stabilité dimensionnelle du moule est essentielle pour la réalisation de la pièce, le matériau solide granulaire 31 est choisi avec un coefficient de dilatation thermique sensiblement égal à celui du matériau composite considéré. En pratique les matériaux composites ayant de faibles coefficients de dilatation on choisit avantageusement un verre borosilicate comme matériau solide granulaire. Les verres borosilicate, riche en silice, sont réputés pour leur excellent comportement aux températures élevées et leur faible coefficient de dilatation thermique autour de 3,5 10E-6 par Kelvin, sensiblement égal à celui des matériaux composites courants.

A contrario le choix d'un matériau ayant une augmentation sensible de volume avec la température permet d'augmenter de manière contrôlée les dimensions du noyau 2 lorsque la température augmente pendant la cure thermique avec pour effet de participer à la pression générée par le noyau 2 sur le matériau composite en cours de polymérisation. Un tel effet est par exemple obtenu avec un alliage d'aluminium ayant un coefficient de dilatation de l'ordre de 24 10E-6 par Kelvin notamment si la pièce est réalisée dans un moule creux réalisé avec un matériau ayant un coefficient de dilation thermique plus faible. La dilatation obtenue suivant une direction ayant une valeur absolue fonction de la dimension du noyau 2 dans la direction considérée, l'utilisation de noyau à dilatation contrôlée sera le plus souvent utilisée lorsque le noyau a des dimensions sensiblement équivalentes dans toutes les directions pour obtenir une dilatation homogène du noyau.

Lorsqu'une valeur précise de coefficient de dilatation est recherchée sans qu'un matériau ne donne simplement cette valeur, il est avantageux de mélanger des éléments de matériau solide granulaire de coefficients de dilatation différents pour obtenir la valeur recherchée.

Avantageusement lorsqu'une diffusion rapide et homogène de la chaleur est recherchée, le matériau solide granulaire est choisi avec une conduction thermique élevée, par exemple un alliage métallique. Cet alliage sera par exemple à base d'aluminium si la dilation est sans inconvénient ou si elle est recherchée, et sera par exemple un alliage à faible coefficient de dilatation tel qu'un invar (alliage métallique à base de fer et à forte teneur en nickel) si un faible coefficient de dilatation thermique est recherché en association avec une conduction thermique élevée.

Dans tous les cas on choisit de préférence des éléments de matériau solide granulaire 31 ayant des formes sphériques ou suffisamment émoussées pour que les éléments s'écoulent aisément dans le noyau 2 lorsque celui-ci est rempli ou vidé et pour que le drainage du fluide et la pression résultante soient homogènes lorsque la pression Pn est diminuée ou augmentée dans la vessie 21 du noyau 2. En outre l'utilisation d'éléments sensiblement sphériques permet d'obtenir un remplissage compact laissant un volume inoccupé par lesdits éléments de l'ordre de 40% qui permet d'alléger de manière non négligeable le noyau 2 réalisé et lorsque le fluide est un gaz. Par exemple lorsque qu'un matériau dense est utilisé pour lesdits éléments tel que l'invar dont la densité est de l'ordre de 8, la densité apparente du noyau obtenue est inférieure à 5.

## Revendications

1. Procédé de réalisation d'une pièce (1) en matériau composite, ledit matériau composite comportant des fibres (12, 13) enrobées d'une résine (14) passant d'un état pâteux ou liquide à un état solide au cours d'une phase de durcissement pendant laquelle phase de durcissement la résine est soumise à une élévation de température, ladite pièce (1) comportant une zone partiellement refermée (11), dans laquelle un volume correspondant en tout ou partie à la zone partiellement refermée (11) est occupé, au moins à certaines étapes du procédé, par un noyau (2), ledit noyau comportant une vessie (21) en matériau souple présentant une surface extérieure délimitant un volume du noyau (2) dont les formes et les dimensions sont en accord avec le volume de la zone partiellement refermée (11) et présentant une surface intérieure déterminant un volume de la vessie (21), lequel volume de la vessie (21) est rempli d'éléments d'un matériau solide granulaire (31) et d'un fluide (32) intergranulaire, **caractérisé en ce que** les éléments du matériau solide granulaire (31) sont choisis pour obtenir un coefficient de dilatation thermique apparent du matériau solide granulaire tel que le volume du noyau (2) est modifié de manière contrôlée, c'est à dire que les dimensions du noyau varient de manière prédéterminée, sous l'effet de l'élévation de température associée à la phase de durcissement de la résine et **en ce qu'**une pression Pn du fluide intergranulaire est augmentée pendant la phase de durcissement de la résine soit à une valeur sensiblement égale à une pression Pa appliquée sur la pièce en cours de réalisation pour maintenir des fibres préimprégnées de résine sur le noyau pendant la phase de durcissement de la résine, soit à une valeur au moins égale à une pression Pr d'injection de la résine (14) dans la mise en oeuvre d'un procédé dit RTM.

2. Procédé suivant la revendication 1 dans lequel le volume du noyau (2) est modifié de manière contrôlée en sélectionnant les éléments du matériau solide granulaire (31) parmi des éléments dont les matériaux ont un coefficient de dilatation thermique sensiblement égal au coefficient de dilatation thermique du matériau composite de la pièce.

3. Procédé suivant la revendication 2 dans lequel les éléments du matériau solide granulaire (31) sélectionnés sont constitués essentiellement en un verre borosilicate.

4. Procédé suivant la revendication 2 dans lequel les éléments du matériau solide granulaire (31) sélectionnés sont constitués essentiellement en un alliage fer nickel, type Invar, à faible coefficient de dilatation.

5. Procédé suivant la revendication 2 dans lequel le matériau solide granulaire (31) est constitués d'éléments sélectionnés parmi des éléments en un matériau ou en différents matériaux, le matériau solide granulaire comportant alors un mélange d'éléments réalisés avec des matériaux différents, dont les coefficients de dilatation thermiques sont compris entre 2 10E-6 par Kelvin et 9 10E-6 par Kelvin.

6. Procédé suivant la revendication 1 dans lequel le volume du noyau (2) est modifié de manière contrôlée en sélectionnant les éléments du matériau solide granulaire (31) parmi des éléments dont les matériaux ont un coefficient de dilatation thermique supérieur au coefficient de dilatation thermique du matériau composite de la pièce.

7. Procédé suivant la revendication 6 dans lequel les éléments du matériau solide granulaire (31) sélectionnés sont constitués essentiellement en un alliage d'aluminium.

8. Procédé suivant l'une des revendications précédentes dans lequel le fluide (32) intergranulaire est un fluide incompressible.

9. Procédé suivant l'une des revendications précédentes dans lequel le matériau solide granulaire (31) et ou le fluide intergranulaire (32) sont sélectionnés en outre avec un coefficient de conductivité thermique apte à assurer la diffusion de la chaleur et l'homogénéité de la température lorsque la température de la pièce (1) est modifiée lors de la mise en oeuvre du procédé.

10. Procédé suivant l'une des revendications précédentes dans lequel la pression Pn dans la vessie (21) du noyau (2) est diminuée à une valeur Pd inférieure à la pression atmosphérique après avoir été vidée, au moins partiellement du matériau rigide granulaire (31), afin d'extraire la vessie (21) de la pièce (1).

## Claims

1. Process for producing a part (1) made from a composite, said composite comprising fibres (12, 13) coated with a resin (14) that changes from a pasty or liquid state to a solid state in the course of a curing phase, during which curing phase the resin is subjected to a temperature increase, said part (1) comprising a partially sealed zone (11), in which a volume corresponding completely or partly to the partially sealed zone (11) is occupied, at least at certain steps of the process, by a core (2), said core comprising a bladder (21) made of a flexible material that has an outer surface that delimits a volume of the core (2), the shapes and the dimensions of which are in keeping with the volume of the partially sealed zone (11) and having an inner surface that determines a volume of the bladder (21), which volume of the bladder (21) is filled with components of a granular solid material (31) and an intergranular fluid (32), **characterized in that** the components of the granular solid material (31) are chosen in order to obtain a bulk thermal expansion coefficient of the granular solid material such that the volume of the core (2) is modified in a controlled manner, that is to say that the dimensions of the core vary in a predetermined manner, under the effect of the temperature increase associated with the curing phase of the resin and **in that** a pressure Pn of the intergranular fluid is increased during the curing phase of the resin, either to a value substantially equal to a pressure Pa applied to the part in the process of being produced in order to keep fibres preimpregnated with resin on the core during the curing phase of the resin, or to a value at least equal to a pressure Pr for injecting the resin (14) in the implementation of a process known as RTM.

2. Process according to Claim 1, in which the volume of the core (2) is modified in a controlled manner by choosing the components of the granular solid material (31) from components of which the materials have a thermal expansion coefficient substantially equal to the thermal expansion coefficient of the composite of the part.

3. Process according to Claim 2, in which the components of the granular solid material (31) chosen are predominantly composed of a borosilicate glass.

4. Process according to Claim 2, in which the components of the granular solid material (31) chosen are predominantly composed of an Invar type iron/nickel alloy having a low expansion coefficient.

5. Process according to Claim 2, in which the granular solid material (31) is composed of components chosen from components made from one material or from several materials, the granular solid material then comprising a mixture of components produced with different materials, the thermal expansion coefficients of which are between 2 × 10⁻⁶ K⁻¹ and 9 × 10⁻⁶ K⁻¹.

6. Process according to Claim 1, in which the volume of the core (2) is modified in a controlled manner by choosing the components of the granular solid material (31) from components of which the materials have a thermal expansion coefficient greater than the thermal expansion coefficient of the composite of the part.

7. Process according to Claim 6, in which the components of the granular solid material (31) chosen are predominantly composed of an aluminum alloy.

8. Process according to one of the preceding claims, in which the intergranular fluid (32) is an incompressible fluid.

9. Process according to one of the preceding claims, in which the granular solid material (31) and/or the intergranular fluid (32) are also chosen with a thermal conductivity coefficient capable of ensuring the diffusion of the heat and the homogeneity of the temperature when the temperature of the part (1) is modified during the implementation of the process.

10. Process according to one of the preceding claims, in which the pressure Pn in the bladder (21) of the core (2) is reduced to a value Pd below atmospheric pressure after having been emptied, at least partially, of the granular rigid material (31) in order to extract the bladder (21) from the part (1).

## Patentansprüche

1. Verfahren zum Herstellen eines Teils (1) aus Verbundwerkstoff, wobei der Verbundwerkstoff Fasern (12, 13) enthält, die von einem Harz (14) umhüllt sind, das während einer Aushärtungsphase von einem pastenartigen oder flüssigen Zustand in einen festen Zustand übergeht, wobei in dieser Aushärtungsphase das Harz einer Temperaturerhöhung unterworfen wird, wobei das Teil (1) eine teilweise wieder geschlossene Zone (11) aufweist, in der ein Volumen, das ganz oder teilweise der teilweise wieder geschlossenen Zone (11) entspricht, wenigstens in bestimmten Schritten des Verfahrens von einem Kern (2) eingenommen wird, wobei der Kern eine Blase (21) aus einem nachgiebigen Material enthält, die eine äußere Oberfläche aufweist, die ein Volumen des Kerns (2) begrenzt, dessen Formen und Abmessungen mit dem Volumen der teilweise wieder geschlossenen Zone (11) übereinstimmen, und die eine innere Oberfläche aufweist, die ein Volumen der Blase (21) bestimmt, wobei das Volumen der Blase (21) mit Elementen eines körnigen festen Materials (31) und mit einem Fluid (32) zwischen den Körnern gefüllt ist, **dadurch gekennzeichnet, dass** die Elemente des körnigen festen Materials (31) so gewählt sind, dass ein erkennbarer Wärmeausdehnungskoeffizient des körnigen festen Materials erhalten wird, derart, dass das Volumen des Kerns (2) auf gesteuerte Weise modifiziert wird, d. h. dass sich die Abmessungen des Kerns auf vorgegebene Weise unter der Wirkung der Temperaturerhöhung, die mit der Aushärtungsphase des Harzes einhergeht, verändern, und dass ein Druck Pn des Fluids zwischen den Körnern während der Phase der Aushärtung des Harzes entweder auf einen Wert, der im Wesentlichen gleich einem Druck Pa ist, der auf das Teil während der Herstellung ausgeübt wird, um während der Phase der Aushärtung des Harzes die vorimprägnierten Fasern des Harzes auf dem Kern zu erhalten, oder auf einen Wert, der wenigstens gleich einem Druck Pr zum Einspritzen des Harzes (14) bei der Ausführung eines so genannten RTM-Verfahrens ist, erhöht wird.

2. Verfahren nach Anspruch 1, wobei das Volumen des Kerns (2) auf gesteuerte Weise in der Weise modifiziert wird, dass die Elemente des körnigen festen Materials (31) unter den Elementen gewählt wird, deren Materialien einen Wärmeausdehnungskoeffizienten haben, der im Wesentlichen gleich dem Wärmeausdehnungskoeffizienten des Verbundwerkstoffs des Teils ist.

3. Verfahren nach Anspruch 2, wobei die gewählten Elemente des körnigen festen Materials (31) im Wesentlichen aus einem Borsilikatglas gebildet sind.

4. Verfahren nach Anspruch 2, wobei die gewählten Elemente des körnigen festen Materials (31) im Wesentlichen aus einer Eisen-Nickel-Legierung des Typs Invar mit geringem Ausdehnungskoeffizienten gebildet sind.

5. Verfahren nach Anspruch 2, wobei das körnige feste Material (31) aus Elementen gebildet ist, die aus Elementen aus einem Material oder aus verschiedenen Materialien gewählt sind, wobei das körnige feste Material dann ein Gemisch aus Elementen enthält, die aus verschiedenen Materialien verwirklicht sind, deren Wärmeausdehnungskoeffizienten im Bereich von 2·10⁻⁶ pro Kelvin bis 9 ·10⁻⁶ pro Kelvin liegen.

6. Verfahren nach Anspruch 1, wobei das Volumen des Kerns (2) auf gesteuerte Weise modifiziert wird, derart, dass die Elemente des körnigen festen Materials (31) unter den Elementen gewählt werden, deren Materialien einen Wärmeausdehnungskoeffizienten haben, der größer als der Wärmeausdehnungskoeffizient des Verbundwerkstoffs des Teils ist.

7. Verfahren nach Anspruch 6, wobei die gewählten Elemente des körnigen festen Materials (31) im Wesentlichen aus einer Aluminiumlegierung gebildet sind.

8. Verfahren nach einem der vorhergehenden Ansprüche, wobei das Fluid (32) zwischen den Körnern ein nicht komprimierbares Fluid ist.

9. Verfahren nach einem der vorhergehenden Ansprüche, wobei das körnige feste Material (31) und/oder das Fluid (32) zwischen den Körnern außerdem mit einem Koeffizienten der spezifischen Wärmeleitfähigkeit gewählt werden, der die Ausbreitung der Wärme und die Homogenität der Temperatur gewährleisten kann, wenn die Temperatur des Teils (1) bei der Ausführung des Verfahrens modifiziert wird.

10. Verfahren nach einem der vorhergehenden Ansprüche, wobei der Druck Pn in der Blase (21) des Kerns (2) auf einen Wert Pd verringert wird, der kleiner als der Atmosphärendruck ist, nachdem das körnige starre Material (31) wenigstens teilweise aus ihr geleert worden ist, um die Blase (21) aus dem Teil (1) zu entnehmen.
